# EUROPÄISCHE PATENTANMELDUNG

(11) **EP 4 471 094 A1**
(43) Veröffentlichungstag der Anmeldung: **04.12.2024**
(21) Anmeldenummer: 24177691.3
(22) Anmeldetag: 23.05.2024
(51) Int. Cl.: C08L 97/00, D21H 19/00

(54) **OBERFLÄCHEN-LEIMUNGSMITTEL FÜR PAPIER UND/ODER PAPPE**

(30) Priorität: 31.05.2023 AT 504262023
(71) Anmelder: Mondi AG, 1030 Wien (AT)
(72) Erfinder: LEITNER, Johannes, 4060 Leonding (AT)
(74) Vertreter: Cunow, Gerda

(57) **Zusammenfassung**

Bei einem Oberflächen-Leimungsmittel für Papier und/oder Pappe enthaltend Lignin sowie Ligninsulfonate sowie wenigstens eine weitere oberflächenvergütende Substanz Oberflächen-Leimungsmittel für Papier und/oder Pappe sind Lignin sowie Ligninsulfonate sowie wenigstens eine weitere oberflächenvergütende Substanz enthalten, wobei es 0,1 bis 50 Gew.-%, vorzugsweise 5 bis 20 Gew.-% einer Lignosulfonat-Quelle, 0,1 bis 50 Gew.-%, vorzugsweise 5 bis 25 Gew.-% Lignin, insbesondere Kraft-Lignin sowie wenigstens einen weitere oberflächenvergütende Substanz gewählt aus der Gruppe der hydroxylierten Polymere, wie Stärke, PVOH, natürliche oder synthetische hydrophobe Materialien, wie Tallöl, Tallölseife oder raffinierte Produkte daraus oder hydrophobe Materialien, wie synthetische oder natürliche Wachse, Styrole, Butadien, Acrylate, Alkyl-Keten-Dimer sowie Öle daraus, wie beispielsweise AnKD, Alkenyl-Bernsteinsäure-Anhydrid sowie Rest Wasser als Lösung- und/oder Suspendierungsmittel enthält sowie Verfahren zur Herstellung und Verwendung des Oberflächen-Leimungsmittels.

## Beschreibung

Die vorliegende Erfindung bezieht sich auf ein Oberflächen-Leimungsmittel für Papier und/oder Pappe enthaltend Lignin sowie Ligninsulfonate sowie wenigstens eine weitere oberflächenvergütende Substanz, ein Verfahren zur Herstellung eines Oberflächen-Leimungsmittels für Papier und/oder Pappe enthaltend Lignin sowie Lignosulfonate sowie wenigstens eine weitere oberflächenvergütende Substanz sowie die Verwendung desselben.

Oberflächen-Leimungsmittel wie beispielsweise Lignin werden in der Herstellung von Papier und/oder Pappe seit langem verwendet und sollen einerseits die Festigkeit von Papier geringfügig erhöhen, jedoch andererseits vor allem eine maßgeblich erhöhte wasserabweisende Wirkung bereitstellen und dadurch das Herstellungsverfahren von Papier und/oder Pappe insgesamt günstiger machen. Eine andere Möglichkeit, Lignin bzw. Lignosulfonate in der Behandlung von Papier zu verwenden, ist der Einsatz als Oberflächen-Hydrophobierungsmittel, in welchem Fall das Lignin bzw. die Lignosulfonate gelöst werden und gemeinsam mit Glyzerin als Mischung auf die Papieroberfläche aufgebracht werden. Da Glyzerin bekanntermaßen sehr stark hygroskopisch ist, kann eine Oberflächenbehandlung mit Glyzerin alleine niemals zu einem Papier führen, das eine trockene Oberfläche aufweist und weshalb Lignin bzw. Lignosulfonate zu einer derartigen Mischung zugesetzt werden.

Weiterhin ist beispielsweise in der WO 2015/054736 A1 beschrieben, dass die Oberfläche von Papier mit Lignin aktiviert werden kann, wobei eine derartige Aktivierung üblicherweise nur bei hohen Temperaturen von bis zu 240 °C durchgeführt werden kann, Temperaturen, die so hoch sind, dass sie normalerweise in einer Papiermaschine nicht vorliegen, so dass das halbfertige Papier für eine effiziente Oberflächenaktivierung in eine andere Anlage transferiert werden muss, was das Verfahren wesentlich komplizierte und kostenintensiver macht.

Eine weitere Möglichkeit, eine Verbesserung der Oberflächeneigenschaften von Papier und/oder Pappe zu erreichen ist es, zusätzlich zum Aufbringen eines Oberflächen-Leimungsmittels Oberflächenbehandlungen, wie beispielsweise Kalandern, Bestrahlen, Beschichten und dgl. durchzuführen, wobei insbesondere bei einem Beschichten verschiedenste Materialien auf die Oberfläche eines Papiers aufgebracht werden können, die die Oberflächeneigenschaften des Papiers so weit verändern können, dass ein so behandeltes Papier für eine große Zahl von Einsatzzwecken geeignet ist. Weiterhin ist es bekannt, dass Lignin alleine ein die Oberfläche des Papiers beeinflussendes Material darstellt. Lignin, welches ein natürlich vorkommendes Polymer ist, zeigt hierbei in Abhängigkeit von seinem Vernetzungsgrad, seinem Wassergehalt sowie seiner mittleren Molmasse einen unterschiedlichen Einfluss auf die Oberfläche des Papiers auf.

Schließlich ist es bekannt, dass Lignin umso besser in die äußeren Schichten der Papieroberfläche eindringen kann je niedriger sein Molekulargewicht bzw. seine mittlere Molmasse oder sein hydrodynamischer Radius ist. Weiterhin sinkt, wie dies einem Fachmann ebenfalls bekannt ist, mit einem Anstieg der mittleren Molmasse eines Polymers üblicherweise auch seine Löslichkeit und je höher die mittlere Molmasse eines Polymers ist, desto größer ist üblicherweise auch seine Viskosität in Lösung bzw. Suspension, welche allgemeinen Richtlinien auch für Lignin gelten. Entsprechend den Erkenntnissen von Roberts et al., Controlled black liquor viscosity reduction through salting-in, AiCHe Journal 1996, Vol. 42, Nr. 8 Seiten 2319 - 2386, werden durch oxidative Prozesse mit Oxidationsmitteln wie Sauerstoff, Luft oder Wasserstoffperoxid sowie durch Hochtemperaturbehandlungen von alkalischem Lignin bei über 160 °C Molekülketten vor allem von Hemizellulosen und in einem gewissen Ausmaß auch von Lignin depolymerisiert.

Weiterhin ist es bekannt, dass im Zuge der Abtrennung von Lignin aus beispielsweise Schwarzlauge die Molekularstruktur des Lignins während der Fällung mit Schwefelsäure in kondensierter Form vorliegt. Das Patent US 9,464,219 B2 beschreibt die Reaktivierung von Kraft-Lignin zur Herstellung von Lignin-Phenol-Formaldehydharzen durch Dispergieren von 10 - 50 % Lignin in wässriger Dispersion mit einer Alkaliquelle, wie Natronlauge oder Kalilauge bei 30 - 70 °C und bei 50 °C bis 95 °C. Die Alkalisierung von Lignin entfaltet hierbei seine kondensierte Struktur und legt dadurch die Ladungsgruppen von Lignin in Lösung frei. Durch die Verseifung von Lignin, d.h. dem Versetzen von Lignin mit Alkalien bei höheren Temperaturen, wird Lignin vollständig gelöst. Hierbei wird erst ab Temperaturen von über 100 °C empfohlen einen Katalysator, nämlich eine Säure, wie z.B. Schwefelsäure der Reaktion beizugeben. Auch die Alkalisierung von Lignin mit Erdalkalimetallen ist nicht neu und ist dem Fachmann als "Salting-in" Effekt bekannt (nach Roberts et al. 1996). Die US 9,464,219 B2 beschreibt einen Aschegehalt d.h. Erdalkalimetallionen, der mit über 20 % nur geringfügig unter jenen Werten liegt, die auch in der Schwarzlauge, dem Ausgangsstoff von Kraft-Lignin, vorhanden ist. Eine derartig große Menge an Erdalkalimetallen, d.h. ein Salting-in, führt naturgemäß zu einem Öffnen der spezifischen Oberfläche des Lignin-Clusters, wie dies in der US 9,464,219 B2 beschrieben ist. Jedoch ist die starke Erhöhung der Oberfläche des Lignin-Clusters, d.h. ein zu großer hydrodynamischer Radius von Lignin, nachteilig für die Penetration von Stärke in die Papieroberfläche und ist somit nicht erwünscht.

S. Kopacic et al., "Technical Lignins and their Utilization in the Surface Sizing of Paperboard", Industrial and Engineering Chemical Research 2018, Seiten 6284 ff haben gezeigt, dass wasserlösliches Kraft-Lignin als Oberflächen-Leimungsmittel für Papier eingesetzt werden kann und dass ein derartiges Leimungsmittel eine Vielzahl von Vorteilen gegenüber herkömmlichen Leimungsmitteln aufweist. So konnte gezeigt werden, dass die Viskosität einer als Leimungsmittel einzusetzenden Suspension um 40 % abgesenkt werden kann, wenn Lignin alleine als Leimungsmittel verwendet wird und um 25 %, wenn Lignin gemeinsam mit Stärke verwendet wird, wobei in jedem Fall der Feststoffgehalt unverändert blieb, der Kontaktwinkel des oberflächenbehandelten Papiers beim Bedrucken nach einem benetzen mit Wasser 90° bis 100° betrug und es konnte weiterhin gezeigt werden, dass bei einem Behandeln von Papieroberflächen mit Mischungen aus Stärke und Lignin analoge mechanische Papiereigenschaften im Vergleich zu Papier, welches lediglich mit Stärke behandelt wurde, erreicht werden konnten. Lediglich die hydrophobe Eigenschaft der Papieroberfläche, d.h. der Cobb-Wert stieg bei der beschriebenen Behandlung geringfügig gegenüber der Verwendung von Stärke alleine an. Jedoch konnten in Summe bei Einsatz von Lignin als Leimungsmittel bzw. einer Kombination von Stärke und Lignin als Leimungsmittel im Wesentlichen vergleichbare Werte wie bei der Verwendung von Stärke alleine erzielt werden.

Damit eine derartige Oberflächenbehandlung mit aus der Papier- bzw. Zellstoffherstellung stammendem, neutralem oder wenig basischem Lignin überhaupt möglich ist, muss es jedoch in eine wasserlösliche Form überführt werden, was ebenfalls von S. Kopacic et al. erreicht wurde. Hierfür wurde stark saures Kraft-Lignin in NaOH gelöst und hierbei in seine Na-Form überführt, welche bei einem nachfolgenden Absenken des pH-Werts mit Schwefelsäure in den schwach basischen Bereich immer noch wasserlöslich bleibt und welches nach seiner Fällung als Oberflächen-Leimungsmittel angewandt werden kann. Nachteilig ist bei diesem Verfahren ist, dass die für ein Abtrennen von Lignin zwingend erforderliche Absenkung des pH-Wertes mit Schwefelsäure zu einem starken Aufsalzen führt und dadurch die hydrophobe Wirkung von Lignin reduziert wird. Im praktischen Einsatz eines derartigen Lignins ist es somit wiederum erforderlich große Mengen an hydrophoben, synthetischen Leimungsmitteln zuzusetzen.

Wie dies aus dem Stand der Technik bekannt ist, ist es somit günstig bzw. bevorzugt, basisches Lignin bereitzustellen, welches in der Lage ist, in die Papier- und Zellstoffoberfläche einzudringen. Nachdem Lignin jedoch ein natürliches Polymer darstellt und Polymermoleküle üblicherweise aufgrund ihrer Größe nicht oder nur sehr wenig in eher dichte Oberflächen eindringen können, ist es ein Ziel der vorliegenden Erfindung, ein Oberflächen-Leimungsmittel bereitzustellen, welches in der Lage ist, tief in die Papierstruktur einzudringen und mit welchem es gelingt, die Oberflächeneigenschaften von Papier gegenüber bekannten Lignin enthaltenden oder aus Lignin bestehenden Leimungsmitteln deutlich zu verbessern.

Zur Lösung dieser Aufgabe ist das erfindungsgemäße Oberflächen-Leimungsmittel für Papier und/oder Pappe in Wesentlichen dadurch gekennzeichnet, dass es 0,1 bis 50 Gew.-%, vorzugsweise 5 bis 20 Gew.-% einer Lignosulfonat-Quelle, 0,1 bis 50 Gew.-%, vorzugsweise 5 bis 25 Gew.-% Lignin, insbesondere Kraft-Lignin sowie wenigstens eine weitere oberflächenvergütende Substanz gewählt aus der Gruppe der hydroxylierten Polymere, wie Stärke, PVOH, natürliche oder synthetische hydrophobe Materialien, wie Tallöl, Tallölseife oder raffinierte Produkte daraus oder hydrophobe Materialien, wie synthetische oder natürliche Wachse, Styrole, Butadien, Acrylate, Alkyl-Keten-Dimer sowie Öle daraus, wie beispielsweise AnKD, Alkenyl-Bernsteinsäure-Anhydrid sowie Rest Wasser als Lösungs- und/oder Suspendierungsmittel enthält. Indem das Oberflächen-Leimungsmittel für Papier und/oder Pappe es 0,1 bis 50 Gew.-%, vorzugsweise 5 bis 20 Gew.-% einer Lignosulfonat-Quelle enthält, gelingt es überraschenderweise ein Oberflächen-Leimungsmittel bereitzustellen, welches aufgrund der im neutralen bzw. schwach basischen Zustand anfallenden Lignosulfonat-Quelle bereits den erforderlichen basischen pH-Wert aufweist, um als Oberflächen-Leimungsmittel eingesetzt werden zu können und welches gleichzeitig jedoch nur so schwach basisch ist, dass das zusätzlich in dem Oberflächen-Leimungsmittel enthaltene Lignin immer noch in dem in der Lignosulfonat-Quelle enthaltenden Wasser löslich ist. Als Lignosulfonat-Quelle kann bevorzugt Rotlauge aus einem NSSC.Verfahren oder auch andere Lignosulfonate eingesetzt werden, wie beispielsweise ein aus dem Magnesiumsulfit oder Magnefit-Verfahren stammendes Lignosulfonat oder sprühgetrocknete Lignosulfonate. Bevorzugt wird gemäß einer Weiterbildung der Erfindung Rotlauge aus dem NSSC-Verfahren verwendet. Weiterhin kann aufgrund des schwach basischen Gesamt-pH-Werts des Oberflächen-Leimungsmittels dieses unmittelbar auf eine Papieroberfläche aufgebracht werden, ohne dass eine pH-Werteinstellung erforderlich wäre. Überraschenderweise hat es sich hierbei gezeigt, dass das Oberflächen-Leimungsmittel gemäß der Erfindung einen bedeutend höheren Anteil an gelöstem Lignin aufweist, als dies beispielsweise bei herkömmlichen Verfahren zur Herstellung von Oberflächen-Leimungsmitteln der Fall wäre, selbst wenn diese einen identischen bzw. nahezu identischen pH-Wert wie die imOberflächen- Leimungsmittel gemäß der Erfindung eingesetzte Lignosulsonat-Quelle aufweisen. Daraus folgt, dass es überraschenderweise durch die Verwendung einer Lignosulfonatquelle, wie beispielsweise Rotlauge gelingt, bedeutend größere Mengen an Lignin in Lösung zu bringen, als bei beispielsweise bei Einsatz von Kraft-Lignin alleine. Auf diese Weise gelingt es, ein Oberflächen-Leimungsmittel bereitzustellen, welches aufgrund der guten Löslichkeit des Lignins in der eingesetzten Lignosulfonat-Quelle bedeutend höhere Anteile an gelösten Bestandteilen enthält und somit besser und tiefer in die Papieroberfläche eines damit zu beschichtenden Papiers und/oder einer damit zu beschichtenden Pappe eindringen kann und folglich auch die Staubentwicklung von Papier bei der Weiterverarbeitung von Papier beispielsweise zu Papiersäcken oder Wellpappe durch tiefer in das Papier penetrierte Ligninpartikel verringert werden kann. Aus diesem Grund wird nicht nur eine stärker hydrophobe Oberfläche des Papiers bereitstellt, sondern insbesondere eine tiefere und somit beständigere und vollständigere und insbesondere homogenere Leimung einer Papieroberfläche erreicht.

Die Menge an auf dem Papier oder der Pappe angewandten Leimungsmittel liegt hierbei im üblichen Bereich, nämlich zwischen 1 bis 120 kg, vorzugsweise 5 bis 90 kg Leimungsmittel-Trockenmasse pro Tonne Papier.

Im vorliegenden Zusammenhang sind sämtliche Gew.-% Angaben als Gew.-% der Trockenmasse zu verstehen. Dies deshalb, da bekanntermaßen in einem Papier- und/oder Pappeherstellungverfahren die Feststoffgehalte in der jeweils vorliegenden Suspension sich im Verlaufe des Verfahrens aufgrund von beispielsweise einer Trocknung oder dgl. mehrfach verändern, so dass die Angabe von Absolutwerten erforderlich ist.

Unter Lignin wird im vorliegenden Zusammenhang jegliche Art von Lignin verstanden, insbesondere ein kommerziell erhältliches stark saures Lignin, ebenso wie ein alkalisches, d.h. schwarzes Lignin, welches aus dem Verfahren, vor der sauren Wäsche abgezogen wurde.

Wie dies einer Weiterbildung der vorliegenden Erfindung entspricht, ist das Oberflächen-Leimungsmittel so weitergebildet, dass als Lignosulfonat-Quelle Rotlauge mit einem Gehalt von 5 bis 80 Gew.-% Lignosulfonaten enthalten ist, wodurch es gelingt mit einer geringen Menge an in dem Oberflächen-Leimungsmittel enthaltener als Lignosulfonat-Quelle eingesetzter Rotlauge, eine maximale Wirkung zu erzielen. Indem ein Oberflächen-Leimungsmittel bereitgestellt wird, welches eine 5 bis 80 Gew.-% Lignosulfonat enthaltende Rotlauge einsetzt, gelingt es durch Anwendung des Leimungsmittels eine extrem homogene und stark luftdurchlässige Papieroberfläche auszubilden, welche beispielsweise für ein nachfolgendes Druckverfahren besonders gut geeignet ist. Der Lignosulfonat-Gehalt der bevorzugt als Lignosulfonat-Quelle eingesetzten Rotlauge kann hierbei dadurch eingestellt werden, dass diese entweder unmittelbar als aus dem NSSC-Verfahren stammende flüssige Rotlauge eingesetzt wird, welche nur feststoffgehalte unter etwa 10 % aufweist oder aber als ein wiederum gelöstes bzw. suspendiertes aus einer Sprühtrocknung der Rotlauge stammendes Lignosulfonat-haltiges Produkt eingesetzt wird. Insbesondere im zweiteren Fall kann der Lignosulfonat-Gehalt der resuspendierten Rotlauge beliebig eingestellt werden.

Ein derartiges Oberflächen-Leimungsmittel enthaltend Rotlauge als Lignosulfonat-Quelle ist vor allem deshalb besonders günstig zu verwenden, da es einerseits ein Abfallprodukt nämlich die Rotlauge als eines der Ausgangsmaterialien einsetzt, wodurch gegenüber bekannten Herstellungsverfahren, die einer gesonderten Aufbereitung zuzuführenden Einsatzmaterialien deutlich verringert werden können und andererseits kann dadurch ein Oberflächen-Leimungsmittel bereitgestellt werden, das aufgrund der bedeutend höheren Anteile an gelösten Bestandteilen besser und tiefer in die Papieroberfläche eines damit zu beschichtenden Papiers und/ oder einer damit zu beschichtenden Pappe eindringen kann. Weiterhin hat es sich überraschenderweise gezeigt, dass durch den Einsatz von Rotlauge in dem Leimungsmittel die Porosität bzw.

Luftdurchlässigkeit der mit dem Leimungsmittel geleimten Papiere deutlich stärker als mit herkömmlichen Leimungsmitteln verbessert werden konnte, wie dies insbesondere durch Messung der Luftdurchlässigkeit des Papiers (Gurley-Wert nach ISO 5636-5:2013) bestätigt werden konnte. Diese verbesserte Porosität wird auf in der Suspension feiner verteilte Ligninpartikel zurückgeführt und sie ist insbesondere bei Einsatz des Leimungsmittels im Sackbereich, wo meist eine große Luftdurchlässigkeit gefordert wird, von Vorteil.

Indem das Oberflächen-Leimungsmittel vor seinem Aufbringen einen pH-Wert im Bereich von 5 bis 10, vorzugsweise 7,5 bis 9,5 aufweist, wird ein schwach basisches Oberflächen-Leimungsmittel bereitgestellt, in welchem Lignin immer noch löslich ist und welches aufgrund der darin enthaltenen Lignosulfonat-Quelle, beispielsweise der Rotlauge jedoch nicht so stark basisch ist, dass es beispielsweise eine Schädigung der oberflächlichen Fasern eines Papiers und/oder einer Pappe bewirken könnte. Besonders günstige und bevorzugte Eigenschaften können erzielt werden, wenn das Oberflächen-Leimungsmittel einen pH-Wert im Bereich von 7 bis 9,5 aufweist, in welchem Fall es sich gezeigt hat, dass die einen Bestandteil des Leimungsmittels darstellende Lignosulfonat-Quelle in der Lage ist, besonderes große Mengen an Lignin, insbesondere Kraft-Lignin zu lösen und gleichzeitig der Anteil an ungelösten Schwebstoffen in dem Oberflächen-Leimungsmittel insbesondere vor seinem Vermischen mit Stärke minimiert werden kann.

Obwohl es bekannt ist, dass Lignin und Lignosulfonate als oberflächenvergütende Mittel eingesetzt werden können, werden gemäß der Erfindung die besten Eigenschaften auf einer Papier-und/oder Pappeoberfläche dadurch erreicht, dass, wie dies einer Weiterbildung der Erfindung entspricht, das Oberflächen-Leimungsmittel wenigstens eine weitere oberflächenvergütende Substanz enthält, insbesondere dass die wenigstens eine weitere oberflächenvergütende Substanz in einer Menge von bis zu 97 Gew.-%, vorzugsweise bis zum 85 Gew.-%, noch bevorzugter bis zu 80 Gew.-% und am bevorzugtesten bis zu 75 Gew.-% aller in dem Oberflächen-Leimungsmittel enthaltenen löslichen und/oder suspendierbaren Bestandteile enthalten ist. Oberflächenvergütende Substanzen, wie Tallöl, Polymere, wie z.B Polymere auf der Basis von Styrolen, Acrylaten oder synthetischem Kautschuk, Stärke bzw. weitere raffinierte Produkte, wie z.B. Hydrophobierungsmittel, wie Bensteinsäureanhydrid, Alkylketendime, Wachse oder Öle können einem damit beschichteten Papier und/oder einer Pappe verschiedenste Oberflächeneigenschaften, wie Glätte, Glanz, eine hydrophobe Eigenschaft, eine hydrophile Eigenschaft, eine lipophile Eigenschaft und dgl. mehr verleihen und sind daher insbesondere für spezielle Anwendungen und auch Anwendungen, in welchen die Oberfläche des Papiers bedruckt werden soll, weit verbreitet im Einsatz. Derartige oberflächenvergütende Substanzen sind üblicherweise relativ günstig erhältlich und es hat sich gemäß der vorliegenden Erfindung überraschenderweise herausgestellt, dass eine Beimischung geringer Mengen einer Mischung bestehend aus Lignin und Rotlauge bereits in der Lage ist, große Mengen derartiger bekannter und häufig eingesetzter oberflächenvergütender Substanzen zu suspendieren bzw. zu ersetzen und dass nach Aufbringen einer derartigen Suspension damit behandelte Papier- und/oder Pappeoberflächen exzellente Eigenschaften aufweisen. Insbesondere konnte gezeigt werden, dass das Oberflächen-Leimungsmittel aufgrund des geringen Gehalts an darin ungelösten Ligninpartikeln tief in die Papier- und/oder Pappeoberfläche eindringen kann und somit eine homogene, gut bedruckbare und insbesondere auch hydrophobe Oberfläche ausbilden kann. Wenn von den weiteren oberflächenvergütenden Substanzen Mengen von bis zu 97 Gew.-%, vorzugsweise bis zum 85 Gew.-%, noch bevorzugter bis zu 80 Gew.-% und am bevorzugtesten bis zu 75 Gew.-% aller in dem Oberflächen-Leimungsmittel enthaltenen löslichen und/oder suspendierbaren Bestandteile enthalten sind, ist dies üblicherweise eine Mischung von mehr als einer oberflächenvergütenden Substanz, insbesondere eine Stärke enthaltende Mischung.

Indem, wie dies einer Weiterbildung der vorliegenden Erfindung entspricht, die weitere oberflächenvergütende Substanz, die in dem Oberflächen-Leimungsmittel enthalten ist, Stärke ist, insbesondere gelierte und enzymatisch gekochte native Stärke oder gequollene native Stärke ist, kann die Penetrationstiefe eines derartigen Oberflächen-Leimungsmittels in ein zu leimendes Papier und/oder eine zu leimende Pappe noch weiter verbessert werden, wodurch die mechanischen Eigenschaften des so behandelten Papiers und/oder der Pappe sowie auch deren spezifisches Volumen weiter erhöht werden können. Aufgrund des hohen Anteils an gelösten Lignin in der Lignosulfonate enthaltenden, schwach basischen Rotlauge kann mit dem erfindungsgemäßen Oberflächen-Leimungsmittel die Leimungseffizienz verbessert werden, die Polarität der Oberfläche des geleimten Papiers verringert werden und insbesondere die Gesamtmenge des aufgebrachten Oberflächen-Leimungsmittels verringert werden.

Indem, wie dies einer Weiterbildung der Erfindung entspricht, das Oberflächen-Leimungsmittel so ausgebildet ist, dass die wenigstens eine weitere oberflächenvergütende Substanz eine Mischung aus bis zu 99 Gew.-% aller in dem Oberflächen-Leimungsmittel enthaltenden löslichen und/oder suspendierbaren Bestandteile an Stärke und bis zu 15 Gew.-% aller in dem Oberflächen-Leimungsmittel enthaltenen löslichen und/oder suspendierbaren Bestandteile an natürlichen oder synthetischen hydrophoben Materialien, wie beispielsweise synthetische, hydrophobe Materialien, wie synthetische oder natürliche Wachse, Styrole, Butadien, Acrylate, Alkyl-Keten-Dimer sowie Öle daraus, wie beispielsweise AnKD, Alkylen-Bernsteinsäure-Anhydrid besteht, ist, gelingt es eine besonders homogene Oberflächenleimung bereitzustellen, die tief in die Papieroberfläche eindringt und insbesondere gut bedruckbar ist. Weiterhin konnte der Luftwiderstand eines mit dem Leimungsmittel behandelten Papiers deutlich herabgesetzt werden. Diese Senkung des Luftwiderstands ist bereits bei sehr geringen Mengen der eingesetzten Lignosulfonat-Quelle, wie beispielsweise Rotlauge, in dem Leimungsmittel markant und wird überdies in Richtung eines schwach basischen bzw. neutralen pH-Werts der eingesetzten Lignosulfonat-Quelle umso stärker. Es wird angenommen, dass dieser vollständig unerwartete Effekt dadurch entsteht, dass die Ligninpartikel in der Lignosulfonat-Quelle, beispielsweise Rotlauge besser dispergierbar sind, als in herkömmlichen Suspensionen, und durch diese bessere Dispergierung ein bedeutend homogener oberflächengeleimtes Papier erhalten werden kann.

Die Erfindung bezieht sich weiterhin auf ein Verfahren zur Herstellung eines Oberflächen-Leimungsmittels für Papier und/oder Pappe enthaltend Lignin sowie Lignosulfonate, welches Verfahren dadurch gekennzeichnet ist, dass eine Lignosulfonat-Quelle mit einem pH-Wert im Bereich von 5 bis 10, vorzugsweise 7 bis 9,5 bei einer Temperatur von 60 bis 80 °C mit Lignin, insbesondere Kraft-Lignin unter Rühren versetzt wird, dass nach Bildung einer im Wesentlichen schwebstofffreien Lösung, gegebenenfalls nach Zusetzen von Wasser die wenigstens eine weitere oberflächenvergütende Substanz gewählt aus der Gruppe der hydroxylierten Polymere, wie Stärke, PVOH, natürliche oder synthetische, hydrophobe Materialien, wie Tallöl, Tallölseife oder raffinierte Produkte daraus in einer Menge von bis zu 93 Gew.-%, vorzugsweise bis zu 85 Gew.-%, noch bevorzugter bis zu 80 Gew.-% und am bevorzugtesten bis zu 75 Gew.-% aller in dem Oberflächen-Leimungsmittel enthaltenen gelösten und/oder suspendierbaren Bestandteile zugemischt wird. Indem das Verfahren so geführt wird, dass eineLignosulfonat-Quelle mit einem pH-Wert im Bereich von 5 bis 10, vorzugsweise 7 bis 9,5 bei einer Temperatur von 60 bis 80 °C mit Lignin, insbesondere Kraft-Lignin unter Rühren versetzt wird, gelingt es, eine ligninhaltige Lösung herzustellen, die im Vergleich zu herkömmlichen Lösungen bzw. Suspensionen von Lignin einen deutlich verringerten Anteil an ungelösten Substanzen aufweist, so dass ein mit einem derartigen Verfahren hergestelltes Oberflächen-Leimungsmittel im Vergleich zu herkömmlichen Oberflächen-Leimungsmitteln deutlichen tiefer in die Oberfläche des Papiers und/oder der Pappe penetrieren kann und gleichzeitig bedeutend homogenere Oberflächeneigenschaften bereitstellen kann. Indem weiterhin in einer derartige Lösung aus der Lignosulfonat-Quelle, wie beispielsweise Rotlauge, und Lignin wenigstens eine weitere oberflächenaktive Substanz eingemischt wird, wird ein Oberflächen-Leimungsmittel bereitgestellt, das im Vergleich zu herkömmlichen Oberflächen-Leimungsmitteln bedeutend homogener ist, eine verbesserte Penetrationstiefe in das damit zu behandelnde Papier und/oder Pappe ermöglicht, wodurch nicht nur die Homogenität des so behandelten Papiers und der so behandelten Pappe verbessert werden, sondern auch die mechanischen Eigenschaften und insbesondere die Bedruckbarkeit einer derartig behandelten Papier- und/oder Pappeoberfläche deutlich verbessert werden kann. Gleichzeitig gelingt es mit einer derartigen Verfahrensführung, das Abfallprodukt Rotlauge anstelle, dass es aufwendig aufbereitet werden muss, in der Papier- und/oder Pappeherstellung wiederzuverwerten und somit die Gesamtenergiebilanz des Verfahrens zu verbessern.

Ein besonders gut in eine Papieroberfläche penetriebares Oberflächen-Leimungsmittel wird gemäß der Erfindung dadurch erreicht, dass das Rühren der Mischung aus der Lignosulfonat-Quelle und Lignin sowie gegebenenfalls Wasser für eine Dauer zwischen 10 und 30 min. fortgesetzt wird, bis eine schwebstofffreie Lösung von nicht mehr als 1 Gew.-%, vorzugsweise nicht mehr als 0,5 Gew.-% an ungelösten Feststoff-Partikeln erreicht wird. Die bevorzugte Zeitdauer von 10 bis 30 min. ergibt sich aus der Löslichkeit des Lignins in der basischen Lignosulfonat-Quelle und hängt überraschenderweise vom pH-Wert der Lignosulfonat-Quelle ab. Je stärker basisch die Lignosulfonat-Quelle, beispielsweise Rotlauge, ist, desto stärker ist die dispergierende/lösende Wirkung der Lignosulfonat-Quelle. Dies ist damit erklärbar, dass beispielsweise die als Lignosulfonat-Quelle eingesetztedie Rotlauge eine Mischung aus gelöstem und sulfoniertem Lignin, dem Lignosulfonat, welches in einem weiten pH-Bereich von etwa 5 bis 12 wasserlöslich ist sowie gelösten Zuckern und natürlichen hydrophoben Stoffen der Rotlauge, die einen Anteil an ionisierbaren Ladungsträgern aufweisen, ist, weshalb die dispergierende/ lösende Wirkung mit steigendem pH-Wert ansteigt. Weiterhin ist in dem Leimungsmittel zusätzlich noch Lignin, insbesondere Kraft-Lignin, welches bei einem pH-Wert <10 als Feststoff vorliegt, enthalten. Da wie ausgeführt Rotlauge oder auch eine mit sprühgetrocknetem Lignosulfonat versetzte Rotlauge einen weiten vorzugsweise basischen pH-Wertebereich abdeckt, gelingt somit mit einer stärker basischen Lignosulfonat-Quelle auch die eine bessere Dispergierung/Lösung von Kraft-Lignin.

Indem das Verfahren so geführt wird, dass als weitere oberflächenvergütende Substanz Stärke, insbesondere gelierte und enzymatisch gekochte native Stärke oder gequollene native Stärke in einer Menge von bis zu 98 Gew.-%, vorzugsweise bis zu 85 Gew.-%, noch bevorzugter bis zu 80 Gew.-% und am bevorzugtesten bis zu 75 Gew.-% aller in dem Oberflächen-Leimungsmittel enthaltenen löslichen und/oder suspendierbaren Bestandteile eingesetzt wird, gelingt es, die hydrophoben Eigenschaften des gelösten Lignosulfonats in der Lignosulfonat-Quelle weiter zu verstärken und insbesondere sicherzustellen, dass auf der Oberfläche eines derartig beschichteten Papiers und/oder einer derartig beschichteten Pappe keinerlei Ligninpartikel als Feststoffteilchen verbleiben, so dass eine inhomogene Oberfläche eines derartig beschichteten Papiers ebenso wie an der Oberfläche verbliebene Ligninpartikel vermieden werden können. Vor allem der Umstand, dass es mit dem Verfahren gemäß der Erfindung gelingt eine nahezu vollständige Penetration der Ligninpartikel in das Innere des Papiers zu erreichen, liefert wesentliche Vorteile dahingehend, dass ein derartig beschichtetes Papier nicht aufgrund von auf der Papieroberfläche verbliebenem, pulverförmigen Lignin staubt. Schließlich gelingt es, mit einem gemäß dem Verfahren hergestellten Oberflächen-Leimungsmittel homogene Papier- und/oder Pappeoberflächen auszubilden, in die das Oberflächen-Leimungsmittel tief eingedrungen ist wodurch eine gute Luftdurchlässigkeit des Papiers sichergestellt wird. Gleichzeitig kann sichergestellt werden, dass die Menge an verbrauchtem Oberflächen-Leimungsmittel im Vergleich zu herkömmlichen Oberflächen-Leimungsverfahren nicht erhöht wird, sondern sogar geringfügig verringert werden kann.

Die vorliegende Erfindung zielt weiterhin auf die Verwendung des erfindungsgemäßen Oberflächen-Leimungsmittels ab. Überraschenderweise hat sich gezeigt, dass optimale Ergebnisse mit dem Oberflächen-Leimungsmittel gemäß der Erfindung bei Einsatz auf einer trockenen Papieroberfläche mit einer Filmpresse und/oder Sumpfleimpresse erreicht werden können ebenso wie es auf eine feuchte Papierbahn bzw. zwischen zwei Papierlagen mit Hilfe eines Sprühverfahrens, bei welchem die Tröpfchengröße eingestellt werden kann, aufgebracht bzw. eingebracht werden kann. Eine derartige Verwendung ist beispielsweise bei der Herstellung von mehrlagigen Verpackungspapieren von Vorteil. Ein weiterer Vorteil eines Aufbringens des Leimungsmittels mittels Sprühens kann dadurch erreicht werden, dass es bereits im Bereich der Siebpartie gemeinsam mit Stärke oder ggf. auch gequollener aber noch nicht gekochter Stärke aufgebracht wird. Hier wird vor allem durch die Reduktion der Viskosität der aufzusprühenden Suspension sowie der feinen Dispergierung der Teilchen in derselben, eine tiefe Penetration der Suspension in das Innere der zu entwässernden Bahn erreicht.

Die vorliegende Erfindung wird nachfolgend anhand von Ausführungsbeispielen bzw. Zeichnungen näher erläutert. In diesen zeigen
Fig. 1 ein Diagramm, welches die Menge an ungelösten Teilchen in spezifischen Lignin- und Rotlaugelösungen zeigt,
Fig. 2 ein Blockdiagramm, das einen Industrieversuch auf einer Papiermaschine zeigt, bei welchem die Cobb 60-Werte von einem mit einem herkömmlichen Oberflächen-Leimungsmittels geleimten Papiers mit jenem von einem mit einem Oberflächen-Leimungsmittel gemäß der Erfindung geleimten Papier verglichen werden,
Fig. 3 einen Vergleich von SCT-Werten von mit herkömmlichen Oberflächen-Leimungsmittel geleimten Papier sowie mit einem Oberflächen-Leimungsmittel gemäß der Erfindung geleimten Papier, und
Fig. 4 einen Industrieversuch auf einer Papiermaschine wobei der TSI (Zugfestigkeitsindex gemäß ISO 1924-2) von Papieren die a) mit einem herkömmlichen Oberflächen-Leimungsmittel, b) mit einem Leimungsmittel mit Rotlauge und Lignin sowie c) einem synthetischen Leimungsmittel geleimt wurden, verglichen werden.

### Beispiel 1: Versuche betreffend die Lösung von Lignin in Lignosulfonat enthaltenden Lösungen bzw. in Rotlauge

Zum Ermitteln, ob und inwieweit durch den Einsatz von Rotlauge verbesserte Löslichkeiten von Lignin erhalten werden können, wurden verschiedenste Proben Löslichkeitsversuchen unterworfen. Die untersuchten Proben setzten sich wie folgt zusammen:
1. 5 % Lignin, Lösung in Wasser bei pH 9,5 und 7
2. 10 % Lignin, Lösung in Wasser bei pH 9,5 und 7
3. 15 % Lignin, Lösung in Wasser bei pH 9,5 und 7
4. 15 % Lignin, Lösung in Wasser und 5 Vol.-% Rotlauge bei pH 9,5 und 7
5. 15 % Lignin, Lösung in Wasser und 10 Vol.-% Rotlauge bei pH 9,5 und 7
6. 15 % Lignin, Lösung in Wasser und 15 Vol.-% Rotlauge bei pH 9,5 und 7

Das Mischen wurde bei einer Temperatur von 65 °C ± 3 °C für 30 min durchgeführt, wobei zuerst Lignin und Wasser gemischt wurden, der Trockengehalt bestimmt wurde und nachfolgend die Lösung mit einer 1N Natriumhydroxid/Chlorwasserstoffsäure-Mischung auf einen pH von 9,5 und 7 eingestellt wurde. Nach Ende des Mischens wurde die Menge an nicht gelösten Teilchen mittels Gravimetrie durch Wiegen eines vorabgewogenen feinen Zellulosefilters (quantitatives Filterpapier 474 VWR) über einen Büchner-Trichter durchgeführt. Im Falle des Einsatzes von Rotlauge wurde analog vorgegangen, jedoch wurden 5 %, 10 % bis 15 % des Wassers durch Rotlauge ersetzt.

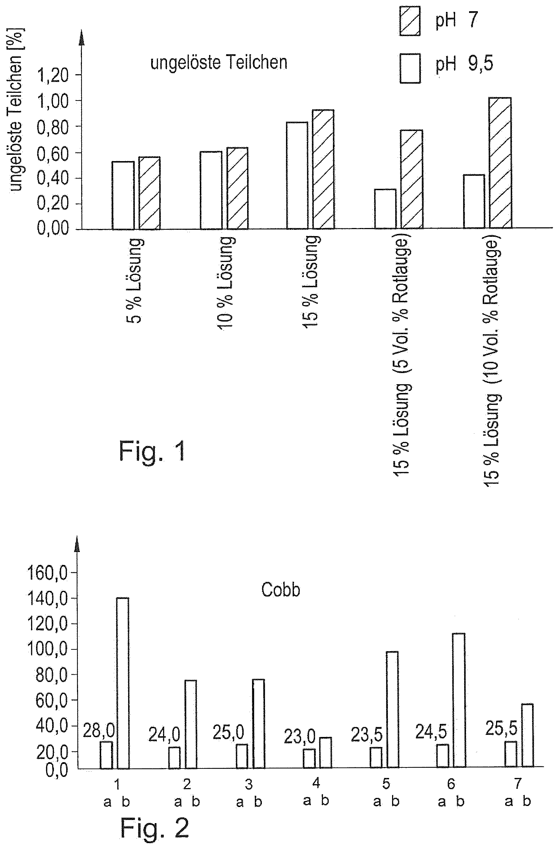

Aus Fig. 1 ist ersichtlich, dass der Feststoffgehalt bei Lösungen, die bei pH 7 und pH 9,5 entstanden sind, kaum unterschiedlich in Bezug auf die Menge der darin enthaltenen Feststoffteilchen sind. Wenn, wie gemäß der Erfindung beschrieben, ein Teil des Wassers durch Rotlauge ersetzt wird, zeigt es sich vor allem bei pH 9,5, dass überraschenderweise Rotlauge als Lösungsvermittler für Lignin bei der Herstellung von Oberflächen-Leimungsmitteln herangezogen werden kann.

### Beispiel 2: Vergleich der Anwendung von verschiedenen Leimungsmitteln auf einem Kraftpapier.

In der nachfolgenden Tabelle 1 werden Zusammensetzungen, Aufbringmengen, Viskositäten bei verschiedenen Temperaturen ebenso wie ein pH-Wert derselben einer Anzahl von Leimungsmitteln, Leimungsmittel A bis I, welche sowohl aus Rotlauge und Lignin aus Schwarzlauge oder nur entweder ein herkömmliches Leimungsmittel, nämlich Stärke und schließlich auch eine Kombination aus Stärke und Lignin aus Schwarzlauge (Lignin ungewaschen) bestehen, zusammengestellt. In Tabelle 2 sind die Papiereigenschaften, welche bei Anwendung der verschiedenen Leimungsmittel A bis I auf einem Basispapier, im vorliegenden Fall einem Kraftpapier mit einem Flächengewicht von 150 g/m² erhalten werden zusammengestellt.

Unter den durchgeführten Versuchen waren drei Vergleichsversuche, nämlich Versuch 1, in welchem als Oberflächen-Leimungsmittel ausschließlich Stärke eingesetzt wurde und Versuchen 2 und 6, in welchen jeweils ein Oberflächen-Leimungsmittel enthaltend 50 Gew.-Teile Stärke und 50 Gew.-Teile Lignin aus Schwarzlauge jedoch bei verschiedenen pH-Werten, nämlich 7 und 9,5, eingesetzt wurden. Auch von den mit Oberflächen-Leimungsmitteln gemäß der Erfindung durchgeführten Leimungsversuchen wurden je drei bei einem pH-Wert von 7 und drei bei einem pH-Wert von 9,5 durchgeführt.

**Tabelle 1: Leimungsmittel**

| Parameter | Einheit | Versuch 1 | Versuch 2 | Versuch 3 | Versuch 4 | Versuch 5 | Versuch 6 | Versuch 7 | Versuch 8 | Versuch 9 |
|---|---|---|---|---|---|---|---|---|---|---|
| Formulierung | | A | B | C | D | E | F | G | H | I |
| Trockengehalt (Ziel) | % | 15 | 15 | 15 | 15 | 15 | 15 | 15 | 15 | 15 |
| Trockengehalt (ist) | % | 14,32 | 14,73 | 14,68 | 14,16 | 14,61 | 14,73 | 14,68 | 14,16 | 14,61 |
| Aufbringmenge (Ziel) | g/m² | 3 | 3 | 3 | 3 | 3 | 3 | 3 | 3 | 3 |
| Aufbringmenge (ist) | g/m² | 2,76 | 2,86 | 2,96 | 2,89 | 2,89 | 2,84 | 2,97 | 2,86 | 2,91 |
| Basisgewicht | g/m² | 150 | 150 | 150 | 150 | 150 | 150 | 150 | 150 | 150 |
| pH-Wert | pH- | Stärke (6,5) | 7 | 7 | 7 | 7 | 9,5 | 9,5 | 9,5 | 9,5 |
| 1.Komponente | | 100 T Stärke | 50T Stärke | 50T Stärke | 50T Stärke | 50T Stärke | 50T Stärke | 50T Stärke | 50T Stärke | 50T Stärke |
| 2.Komponente | | | 50% Lignin (ungewaschen) | 47,5% Lignin (ungewaschen) | 45% Lignin (ungewaschen) | 25% Lignin (ungewaschen) | 50% Lignin (ungewaschen) | 47,5% Lignin (ungewaschen) | 45% Lignin (ungewaschen) | 25% Lignin (ungewaschen) |
| 3.Komponente | | | | 2,5T Rotlauge | 5T Rotlauge | 25T Rotlauge | | 2,5T Rotlauge | 5T Rotlauge | 25T Rotlauge |
| | | | | | | | | | | |

| Viskosität bei 20 °C | | | | | | | | | | |
|---|---|---|---|---|---|---|---|---|---|---|
| 60rpm | mPas | 157,8 | 40,3 | 38,6 | 43,6 | 44,3 | 40,3 | 38,6 | 43,6 | 44,3 |
| 120rpm | mPas | 160,1 | 44,7 | 44,0 | 48,0 | 50,7 | 44,7 | 44,0 | 48,0 | 50,7 |
| 240rpm | mPas | 165,9 | 58,8 | 56,0 | 54,0 | 60,8 | 58,8 | 56,0 | 54,0 | 60,8 |
| 360rpm | mPas | 174,2 | 65,5 | 64,9 | 59,9 | 69,5 | 65,5 | 64,9 | 59,9 | 69,5 |
| 3480rpm | mPas | 183,6 | 73,7 | 73,7 | 75,2 | 76,7 | 73,7 | 73,7 | 75,2 | 76,7 |
| | | | | | | | | | | |

| Viskosität bei 65 °C | | | | | | | | | | |
|---|---|---|---|---|---|---|---|---|---|---|
| 60rpm | mPas | 46,9 | 14,7 | 14,0 | 17,0 | 17,1 | 14,7 | 14,0 | 17,0 | 17,1 |
| 120rpm | mPas | 50,2 | 19,5 | 19,0 | 20,0 | 21,5 | 19,5 | 19,0 | 20,0 | 21,5 |
| 240rpm | mPas | 60,5 | 27,9 | 26,5 | 25,5 | 29,1 | 27,9 | 26,5 | 25,5 | 29,1 |
| 360rpm | mPas | 69,2 | 30,9 | 31,5 | 30,5 | 34,2 | 30,9 | 31,5 | 30,5 | 34,2 |
| 480rpm | mPas | 77,3 | 37,3 | 34,3 | 35,0 | 39,2 | 37,3 | 34,3 | 35,0 | 39,2 |
| | | | | | | | | | | |
| Gesamte aufgebrachte Stärkemenge | [kg/to] | 16,2 | 9,1 | - | - | 9 | 8,7 | - | - | 9,1 |
| Gesamte aufgebrachte Stärkemenge | [g/m²] | 2,4 | 1,4 | - | - | 1,3 | 1,3 | - | - | 1,4 |
| Stärkemenge auf Oberseite | [g/m²] | 2 | 1 | - | - | 1 | 1 | - | - | 1 |
| Stärkemenge auf Unterseite | [g/m²] | 0,4 | 0,4 | - | - | 0,4 | 0,3 | - | - | 0,4 |

| | | | | | | | | | | |
|---|---|---|---|---|---|---|---|---|---|---|
| Die Viskosität wurde bei pH 7 gemessen. Das im Versuch eingesetzte Lignin war schwarzes Lignin | | | | | | | | | | |

**Tabelle 2: Papiereigenschaften von mit Leimungsmitteln A bis I geleimten Kraftpaieren**

| Parameter | Einheit | Versuch 1 | Versuch 2 | Versuch 3 | Versuch 4 | Versuch 5 | Versuch 6 | Versuch 7 | Versuch 8 | Versuch 9 |
|---|---|---|---|---|---|---|---|---|---|---|
| Bruchfestigk. MD ISO 1924-2 | N | 211,1 | ^209,5 | 200,8 | 200,8 | 202,4 | 210,3 | 198,2 | 194,1 | 203,5 |
| Bruchfestigkeit CD ISO 1924-2 | N | 87,4 | 89,0 | 92,3 | 88,2 | 93,8 | 97,0 | 93,6 | 96,2 | 93,6 |
| Bruchfestig. Geometrisch¹, berechnet | N | 135,8 | 136,5 | 136,1 | 133,1 | 137,8 | 142,8 | 136,2 | 136,6 | 138,0 |
| Reißlänge MD ISO 1924-2 | km | 9,57 | 9,50 | 9,10 | 9,10 | 9,17 | 9,53 | 8,98 | 8,80 | 9,22 |
| Reißlänge CD ISO 1924-2 | km | 3,96 | 4,04 | 4,18 | 4,00 | 4,25 | 4,40 | 4,24 | 4,36 | 4,24 |
| Reißlänge geometrisch, ISO 1924-2 | km | 6,16 | 6,20 | 6,17 | 6,03 | 6,24 | 6,48 | 6,17 | 6,19 | 6,25 |
| Zugfestigkeit MD ISO 1924-2 | kN/m | 14,08 | 13,97 | 13,39 | 13,39 | 13,50 | 14,02 | 13,21 | 12,94 | 13,57 |
| Zugfestigkeit CD ISO 1924-2 | kN/m | 5,83 | 5,94 | 6,16 | 5,88 | 6,25 | 6,47 | 6,24 | 6,41 | 6,24 |
| Zugfestigkeit geometrisch ISO 1924-2 | kN/m | 9,06 | 9,11 | 9,08 | 8,87 | 9,19 | 9,52 | 9,08 | 9,11 | 9,20 |
| Zugfestigkeit geometrisch ISO 1924-2 | Nm/g | 59,31 | 59,59 | 59,37 | 58,04 | 60,08 | 62,31 | 59,35 | 59,58 | 60,18 |
| | | | | | | | | | | |
| Berstwiderstand TS ISO 2758-1 | kPa | 607 | ^609 | 630 | 625 | 628 | 612 | 624 | 621 | 623 |
| Berstwiderstand BS ISO 2758-1 | kPa | 519 | 530 | 542 | 554 | 563 | 538 | 547 | 556 | 584 |
| mittlerer Berstwiderstand ISO 2758-1 | kPa | 563 | 569,5 | 586 | 589,5 | 595,5 | 575 | 585,5 | 588,5 | 603,5 |
| | | | | | | | | | | |
| Gurley ISO 5636-1 | Sek. | 179 | 162 | 150 | 135 | 122 | 188 | 173 | 158 | 134 |
| | | | | | | | | | | |
| L* TS² | | 57,48 | 55,33 | 54,72 | 55,34 | 57,66 | 54,92 | 54,48 | 54,91 | 56,78 |
| L* BS³ | | 64,3 | 64,32 | 64,13 | 63,91 | 63,84 | 64,46 | 64,02 | 63,77 | 63,54 |
| a*TS | | 9,07 | 9,47 | 9,55 | 9,58 | 8,98 | 9,4 | 9,49 | 9,38 | 8,94 |
| a* BS | | 6,99 | 7,02 | 7,12 | 7,26 | 7,22 | 6,96 | 7,08 | 7,06 | 7,08 |
| b* TS | | 22,55 | 22,86 | 22,91 | 23,07 | 23,75 | 22,63 | 22,89 | 23,06 | 23,83 |
| b* BS | | 18,21 | 18,39 | 18,58 | 18,97 | 18,98 | 18,28 | 18,44 | 18,56 | 18,84 |
| | | | | | | | | | | |
| Reibungskoeffizient | | 0,32 | 0,33 | 0,33 | 0,37 | 0,38 | 0,34 | 0,35 | 0,36 | 0,38 |
| Gleitwinkel | ° | 17,5 | 18,4 | 18,5 | 20,2 | 20,7 | 18,8 | 19,4 | 19,9 | 21 |
| | | | | | | | | | | |

| | | | | | | | | | | |
|---|---|---|---|---|---|---|---|---|---|---|
| ¹ geometrisch bedeutet geometrisches Mittel / Quadrat-Wurzel aus dem mathematischen Produkt des Werts in Maschinenrichtung und des Werts in Querrichtung ² TS bedeutet Top-Side (Oberseite des Papiers) ³ BS bedeutet Bottom-Side (Unterseite des Papiers L*, a* und b* entsprechen einem Farbraum nach ISO11664-4 (https://de.wikipedia.org/wiki/Lab-Farbraum | | | | | | | | | | |

### Beispiel 3: Anwendung der Leimungsmittel auf einer industriellen Papiermaschine

Auf einer industriellen Papiermaschine wird ein 2-lagiges Produkt mit einer ersten Lage (Unterseite) bestehend aus 100 % rezyklierten Fasern und der zweiten Lage (Oberseite) bestehend aus 100 % Frischfasern mit einer Kappa-Zahl von 85 gemäß ISO 302 hergestellt, auf welches Papier mit einer Sumpfleimpresse ein Oberflächen-Leimungsmittel mit einem Feststoffgehalt von rund 5 % in einer Menge von 20 kg ATRO pro Tonne Papier aufgetragen wird. Dabei wurde das Oberflächen-Leimungsmittel so aufgebracht, dass auf der Unterseite 25 Gew.-% Rotlauge, 5 Gew.-% Kraftlignin und 70 Gew-% enzymatisch abgebaute Stärke verwendet wurden (wie dies mit den Balken rechts außen in Fig. 2 bis 4 dargestellt ist). Die Oberseite stellt bei Verwendung des Papiers für die Herstellung von Wellpappe den Liner, d.h. die zu bedruckende Seite dar und somit wurde das Oberflächenleimungsmittel weiterhin durch Zusatz von 7 Gew.-% eines synthetischen hydrophoben Materials aus der Stoffklasse eines anionischen Styrol-Acrylates verfeinert (somit reduzieren sich die Gew.-% der Rotlauge bzw. des Lignins bzw. der Stärke geringfügig).

Bei Überprüfung einer Wellpappe, die die obigen Papiere als Top- und Base-Liner aufweist, konnte überraschenderweise gezeigt werden, dass das Oberflächenleimungsmittel für die Unterseite selbst ohne, dass ein synthetisches hydrophobes Material enthalten ist, allein durch die industrielle Fahrweise unter Verwendung einer Leimpresse, einer Temperaturführung sowie einer Trocknung bereits eine stark hydrophobe Wirkung zeigt und dass durch die Zugabe eines weiteren synthetischen hydrophoben Materials der Cobb 60 Wert gemäß ISO 535 weiter reduziert werden konnte.

Der in Fig. 2 dargestellte Industrieversuch auf einer Papiermaschine zeigt den Vergleich eines herkömmlichen Oberflächen-Leimungsmittel mit Rotlauge, Lignin, Stärke und einem hydrophoben Material (Tambournummer 30278041, Nr. 7 in Fig. 2 bis 4), sowie weiterhin den Vergleich zu anderen Tambouren (Nr. 1 bis 6 in Fig. 2 bis 4), auf welchem Papier aufgerollt ist, welche ohne Rotlauge und Lignin. Die Tambournummern des industrieversuchs waren wie folgt: 30278035 = 1 in der Figur, 30278036 = 2 in der Figur, 30278037 = 3 in der Figur, 30278038 = 4 in der Figur, 30278039 = 5 in der Figur und 30278040 = 6 in der Figur. Weiterhin bedeutet in den Figuren a hierbei Oberseite und b bedeutet Unterseite.

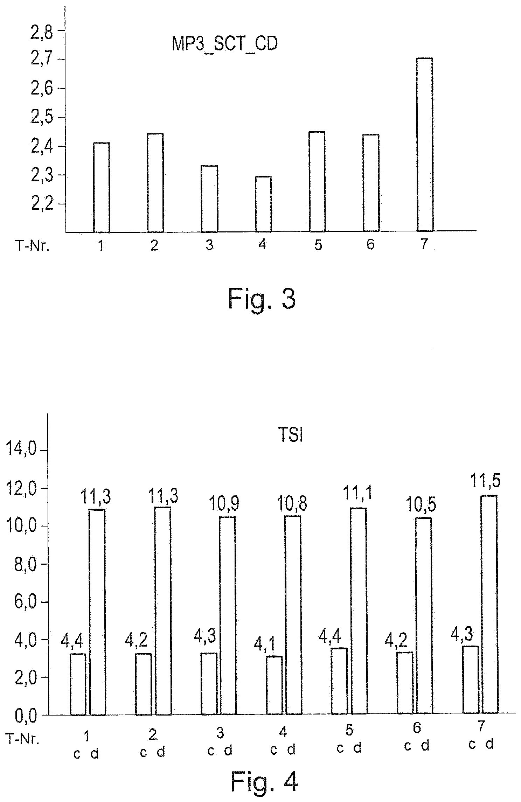

Weiterhin konnte, wie dies der Fig. 3 zu entnehmen ist, überraschenderweise gezeigt werden, dass durch die industrielle Fahrweise der Rezepturen mit Rotlauge und Kraft-Lignin der SCT Wert gemäß ISO 9895 (angegeben in kN/m) maßgeblich gesteigert werden kann. Dies ist indirekt auf die verbesserte Penetration des Oberflächen-Leimungsmittels ins Papier zurückzuführen. Weiterhin kann ausgeschlossen werden, dass dieser Wert durch eine geänderte Faserorientierung im Papier erreicht wurde, was sich aus der gleichen Zugsteifigkeit (TSI) in Quer- und Längsrichtung im Papier ergibt.

In Fig. 2 bis 4 sind sämtliche Vergleichsversuche bzw. Vergleichswerte auf der letzten Seite dargestellt sowie die erfindungsgemäßen Leimungsmittel mit Rotlauge und Lignin sowie einem synthetischen Leimungsmittel sind rechts außen in der Figur dargestellt. Die Tambournummern der einzelnen durchgeführten Versuche sind in den Fig. 2 bis 4 auf der Abszisse aufgetragen. Auf jeden Tambour sind rund 15 t produziertes Papier aufgewickelt.

Schließlich zeigt Fig. 4 einen Industrieversuch auf einer Papiermaschine wobei ein herkömmliches Oberflächen-Leimungsmittel ohne Rotlauge und Lignin mit einem Leimungsmittel mit Rotlauge und Lignin sowie einem synthetischen Leimungsmittel in Bezug auf den zu erhaltenden Zugfestigkeitsindex (TSI) verglichen wurde. c bedeutet in der Figur CD und d bedeutet in der Figur MD.

Aus diesen Vergleichen ergibt sich, dass der Cobb 60-Wert von mit einem Oberflächen-Leimungsmittel gemäß der Erfindung geleimten Papieren deutlich abgesenkt werden konnte, die Festigkeitseigenschaften des Papiers jedoch nicht nachteilig beeinflusst wurden. Vielmehr konnte insbesondere der SCT- Wert in Querrichtung (CD) deutlich verbessert werden und auch der Zugfestigkeitsindex (TSI) wurde im Vergleich zu herkömmlich geleimten Papieren weiter erhöht.

## Patentansprüche

1. Oberflächen-Leimungsmittel für Papier und/oder Pappe enthaltend Lignin sowie Ligninsulfonate sowie wenigstens eine weitere oberflächenvergütende Substanz, **dadurch gekennzeichnet, dass** es 0,1 bis 50 Gew.-%, vorzugsweise 5 bis 20 Gew.-% einer Lignosulfonat-Quelle, 0,1 bis 50 Gew.-%, vorzugsweise 5 bis 25 Gew.-% Lignin, insbesondere Kraft-Lignin sowie wenigstens einen weitere oberflächenvergütende Substanz gewählt aus der Gruppe der hydroxylierten Polymere, wie Stärke, PVOH, natürliche oder synthetische hydrophobe Materialien, wie Tallöl, Tallölseife oder raffinierte Produkte daraus oder hydrophobe Materialien, wie synthetische oder natürliche Wachse, Styrole, Butadien, Acrylate, Alkyl-Keten-Dimer sowie Öle daraus, wie beispielsweise AnKD, Alkenyl-Bernsteinsäure-Anhydrid sowie Rest Wasser als Lösung- und/oder Suspendierungsmittel enthält.

2. Oberflächen-Leimungsmittel nach Anspruch 1, **dadurch gekennzeichnet, dass** als Lignosulfonat-Quelle Rotlauge mit einem Gehalt von 5 bis 50 Gew.-% Lignosulfonaten enthalten ist.

3. Oberflächen-Leimungsmittel nach Anspruch 1 oder 2, **dadurch gekennzeichnet, dass** es einen pH-Wert im Bereich von 5 bis 10, vorzugsweise 7 bis 9,5 aufweist.

4. Oberflächen-Leimungsmittel nach Anspruch 1, 2 oder 3, **dadurch gekennzeichnet, dass** die wenigstens eine weitere oberflächenvergütende Substanz in einer Menge von bis zu 98 Gew.-%, vorzugsweise bis zum 85 Gew.-%, noch bevorzugter bis zu 80 Gew.-% und am bevorzugtesten bis zu 75 Gew.-% aller in dem Oberflächen-Leimungsmittel enthaltene löslichen und/oder dispergierbaren Bestandteile, wie Füllstoffe oder Farbstoffe enthalten ist.

5. Oberflächen-Leimungsmittel nach einem der Ansprüche 1 bis 4, **dadurch gekennzeichnet, dass** die wenigstens eine weitere oberflächenvergütende Substanz eine Mischung aus bis zum 99 Gew.-% aller in dem Oberflächen-Leimungsmittel enthaltenden löslichen und/oder suspendierbaren Bestandteile an Stärke und bis zu 15 Gew.-% aller in dem Oberflächen-Leimungsmittel enthaltenen löslichen und/oder suspendierbaren Bestandteile an natürlichen oder synthetischen hydrophoben Materialien, wie Polymeren auf der Basis von Styrolen, Acrylaten oder synthetischem Kautschuk, Stärke bzw. weitere raffinierte Produkte, wie Hydrophobierungsmittel, wie Bernsteinsäureanhydrid, Alkylketendime, Wachse oder Öle besteht.

6. Oberflächen-Leimungsmittel nach einem der Ansprüche 1 bis 5, **dadurch gekennzeichnet, dass** als weitere oberflächenvergütende Substanz Stärke, insbesondere gelierte und enzymatisch gekochte native Stärke oder gequollene native Stärke enthalten ist.

7. Verfahren zur Herstellung eines Oberflächen-Leimungsmittels für Papier und/oder Pappe enthaltend Lignin sowie Lignosulfate sowie wenigstens eine weitere oberflächenvergütende Substanz, **dadurch gekennzeichnet, dass** eine Lignosulfonat-Quelle mit einem pH-Wert im Bereich von 5 bis 10, vorzugsweise 7 bis 9,5 bei einer Temperatur von 60 bis 80 °C mit Lignin, insbesondere Kraft-Lignin unter Rühren versetzt wird, dass nach Bildung einer Lösung, die im Wesentlichen frei von nicht-dispergierbaren Teilchen ist sowie gegebenenfalls nach Zusetzen von Wasser die wenigstens eine weitere oberflächenvergütende Substanz gewählt aus der Gruppe der hydroxylierten Polymere, wie Stärke, PVOH, natürlichen oder synthetischen Materialien, wie Tallöl, Tallölseife oder raffinierten Produkte daraus in einer Menge von bis zu 98 Gew.-%, vorzugsweise bis zu 85 Gew.-%, noch bevorzugter bis zu 80 Gew.-% und am bevorzugtesten bis zu 75 Gew.-% aller in dem Oberflächen-Leimungsmittel gelösten und/oder suspendierbaren Bestandteile zugemischt wird.

8. Verfahren nach Anspruch 7, **dadurch gekennzeichnet, dass** das Rühren der Mischung aus der Lignosulfonat-Quelle und Lignin sowie gegebenenfalls Wasser für die Dauer zwischen 10 bis 30 min, bis ein Feststoffgehalt in der im Wesentlichen klaren Lösung von nicht mehr als 0,5 Gew.-% erreicht wird, durchgeführt wird.

9. Verfahren nach Anspruch 7 oder 8, **dadurch gekennzeichnet, dass** dass als Lignosulfonat-Quelle Rotlauge mit einem Gehalt von 5 bis 50 Gew.-% Lignosulfonaten eingesetzt wird.

10. Verfahren nach Anspruch 7, 8 oder 9, **dadurch gekennzeichnet, dass** als weitere oberflächenvergütende Substanz Stärke, insbesondere gelierte und enzymatisch gekochte native Stärke oder gequollene native Stärke in einer Menge von bis zu 93 Gew.-%, vorzugsweise bis zu 85 Gew.-%, noch bevorzugter bis zu 80 Gew.-% und am bevorzugtesten bis zu 75 Gew.-% aller in dem Oberflächen-Leimungsmittel enthaltenen löslichen und/oder suspendierbaren Bestandteile eingesetzt wird.

11. Verwendung des Oberflächen-Leimungsmittels gemäß einem der Ansprüche 1 bis 6 auf einer getrockneten Papierbahn, insbesondere durch Aufbringen des Oberflächen-Leimungsmittels mit einer Filmpresse oder einer Sumpfleimpresse auf einer trockenen Papierbahn.

12. Verwendung des Oberflächen-Leimungsmittels gemäß einem der Ansprüche 1 bis 6 auf einer feuchten Papierbahn, insbesondere auf einer Oberfläche mit einer Papierlage oder zwischen zwei Papierlagen.
